Europäisches Patentamt

**European Patent Office**

Office européen des brevets

(19)

(11) Publication number : **0 226 442 B1**

(12)

# EUROPEAN PATENT SPECIFICATION

(45) Date of publication of patent specification :
05.06.91 Bulletin 91/23

(51) Int. Cl.⁵ : **G21C 3/32, G21C 19/10**

(21) Application number : **86309593.1**

(22) Date of filing : **09.12.86**

(54) **Latching device for releasably attaching elongate members to top nozzles of nuclear fuel assemblies.**

(30) Priority : **10.12.85 US 807142**

(43) Date of publication of application :
**24.06.87 Bulletin 87/26**

(45) Publication of the grant of the patent :
**05.06.91 Bulletin 91/23**

(84) Designated Contracting States :
**BE ES FR GB IT SE**

(56) References cited :
**EP-A- 0 085 627**
**DE-A- 2 520 345**
**FR-A- 1 511 234**
**FR-A- 2 384 323**
**FR-A- 2 531 257**
**US-A- 3 769 158**

(73) Proprietor : **WESTINGHOUSE ELECTRIC CORPORATION**
**Westinghouse Building Gateway Center**
**Pittsburgh Pennsylvania 15222 (US)**

(72) Inventor : **Gjertsen, Robert Kenneth**
**126 Penn Lear Drive**
**Monroeville, PA 15146 (US)**
Inventor : **Wilson, John Francis**
**3560 Meadowgate Drive**
**Murrysville, PA 15668 (US)**

(74) Representative : **van Berlyn, Ronald Gilbert**
**23, Centre Heights**
**London, NW3 6JG (GB)**

## Description

The present invention relates generally to fuel assemblies for nuclear reactors and, more particularly, to control members such as burnable absorber rods or the like, arranged for releasable attachment to top nozzles of fuel assemblies.

In a typical nuclear reactor, the reactor core includes a large number of fuel assemblies each of which is composed of top and bottom nozzles with a plurality of elongate, transversely spaced guide thimbles extending longitudinally between the nozzles and a plurality of transverse support grids axially spaced along and attached to the guide thimbles. Each fuel assembly is composed of a plurality of elongate fuel elements or rods transversely spaced from one another and from the guide thimbles and supported by the transverse grids between the top and bottom nozzles. The fuel rods contain fissile material and are grouped together in an array which is organized so as to provide a neutron flux in the core sufficient to support a high rate of nuclear fission and thus the release of a large amount of energy in the form of heat. A liquid coolant is pumped upwardly through the core in order to extract some of the heat generated in the core for the production of useful work.

Since the rate of heat generation in the reactor core is proportional to the nuclear fission rate and this, in turn, is determined by the neutron flux in the core, control of heat generation at reactor start-up during its operation, and at shutdown is achieved by varying the neutron flux. Generally, this is done by means of control rods which contain neutron absorbing material and are employed to absorb excess neutrons. The guide thimbles, in addition to being structural elements of the fuel assembly, provide channels for the neutron absorber control rods to be inserted into the reactor core. The level of neutron flux and, thus, the heat output of the core are normally regulated through movement of the control rods into and from the guide thimbles.

It is conventional practice to design an excessive amount of neutron flux into the reactor core initially so that, as the flux is depleted over the life of the core, there will still be sufficient reactivity to sustain core operation over a long period of time. Because of this practice, in some reactor applications, burnable absorber or poison rods are inserted in the guide thimbles of some fuel assemblies to assist the control rods in the guide thimbles of other fuel assemblies in maintaining the neutron flux or reactivity of the reactor core relatively constant over its lifetime. The burnable poison rods, like the control rods, contain neutron absorbing material, and they differ from the control rods mainly in that they remain stationary in the guide thimbles throughout their use in the core. The overall advantages to be gained from using burnable poison rods at stationary positions in a nuclear reactor core are described in U.S. Patents Nos. 3,361,857 and 3,510,398.

The availability of assemblies of burnable absorber rods on a rapid response basis is required at reactor fuel reload time. The present design of burnable absorber assemblies includes a plurality of absorber rods precisely spaced apart, and thimble plugs fastened at their upper ends to a support plate which also mounts a central hold-down device. In view of the multiplicity of components which make up the absorber assemblies, and the precise spacing required between them when they are assembled together, it has been found necessary to assemble the absorber assembles at a manufacturing facility located remote from the reactor site. The final absorber assemblies are then shipped together with the fuel assembles to the reactor site. This means that the particular absorber assembly design must be specified well in advance of the time of actual reload.

However, it is desirable to have the flexibility of specifying the burnable absorber assembly configurations at the latest possible time in order that the nuclear reload design can be fine-tuned based on the latest reactor operations input. The ultimate absorber assembly configurations specified may advantageously include, for example, twelve burnable absorber rods and twelve thimble plugs per assembly or other combinations of absorber rods and thimble plugs. To accommodate these variations in configurations with the present design, within the time frame mentioned above, would require final assembly of the burnable absorber assemblies at the reactor site, which is not a practical procedure because of the particular design of the absorber assembly.

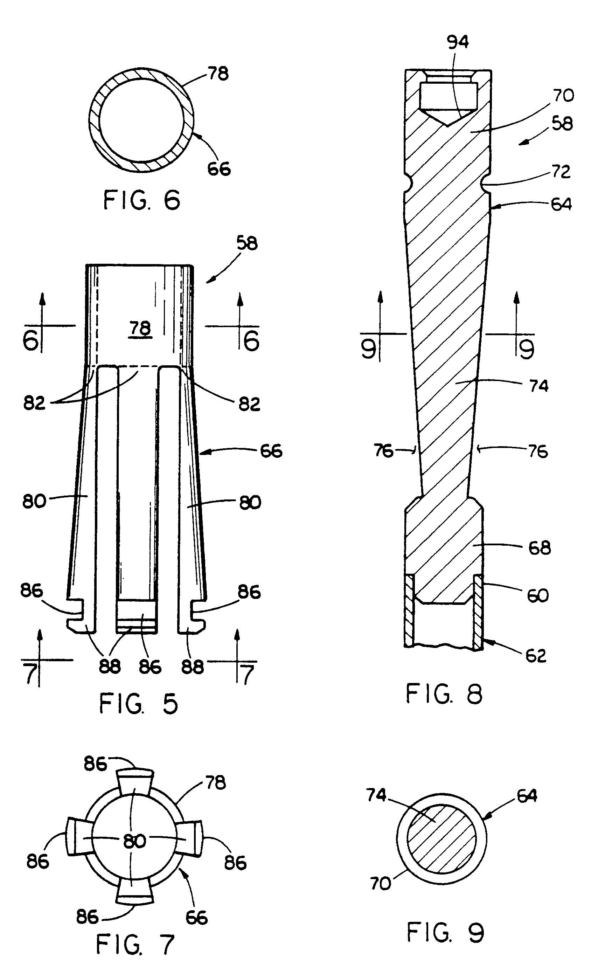

Reference is made to FR-A-2531257 the objective of which is to devise an easier way of attaching an end plate 2 of a fuel assembly to a tie rod 4 or 5 connecting the end plates 2, 3, fuel rod space grids 6, 7, and control-rod guide thimble guide tubes (not shown) together as a unitary structure commonly known as the skeleton of a fuel assembly. According to FR-A-2531257 its objective is attained by affixing, e.g. spot-welding, to each tie rod 4 (or 5) a lower sleeve 11 having a bearing collar 11a for supporting the end plate 2, placing on the tie rod a spring sleeve 14 having resilient blades 10 cooperable with the shoulder in the passageway 12 of the end plate 2 to hold the latter down, and affixing, e.g. spot-welding, to the tie rod 4 a retainer sleeve 17 holding the spring sleeve 14 captive between the retainer and support sleeves 11, 17. As the end plate 2 is initially lowered into position upon the tie rods, the resilient blades 10 of the spring sleeve 14 on each tie rod will first yield and then snap to their hold-down position overlying the flange portion 13 of the end plate. Subsequently, the end plate 2 can be removed by applying a tool 21 with a sleeve 22 (Fig. 7) resiliently depressing the spring blades 10 so as to release the end plate for upward movement thereof, and then lifting the end plate off the tie rods 4 and 5.

The spring sleeve 14 in FR-A-2531257 functions, in conjunction with the support and retainer sleeves 11, 17, only as an end-plate retainer and cannot by itself function as a spring "latch" for latching the rod-like control member to the top nozzle adapter plate. Moreover, the manner in which FR-A-2531257 achieves its own objective does not alleviate the specific problem mentioned in the preceding paragraphs.

Hence, it is the principal object of the invention to provide an absorber assembly which is so constructed as to permit greater flexibility in arriving at what the final configuration should be, based on substantially current reactor operating information.

The invention consists in a rod-like control member for use in a nuclear fuel assembly having an end structure with an adapter plate, said rod-like control member being insertable into the fuel assembly through a passageway formed in the adapter plate, characterized in that said rod-like control member includes a releasable latching device comprising : (a) an elongate mounting body rigidly connected to, and extending axially from, the end of the rod-like control member which is its trailing end during insertion thereof through said passageway ; and (b) a spring latch affixed to said mounting body and having at least one latch finger with a latching formation which is engageable with a complementary latching formation of the adapter plate, said or each latch finger being biased toward a latching position causing its latching formation, upon full insertion of the rod-like control member into the fuel assembly, to engage the complementary latching formation of the adapter plate so as to secure the control member against axial movement thereof relative to the adapter plate, said or each latch finger being movable from said latching position to an unlatching position so as to disengage its latching formation from said complementary latching formation and thereby release the control member for axial removal thereof from the fuel assembly.

By including the latching device as part of the control member (which member may be an absorber rod or thimble plug), it is possible for such control members to be handled in a manner allowing their final arrangement to be specified just before reload time so that the latest reactor operating information can be taken into consideration. Basically, the invention enables absorber rods and thimble plugs to be individually and easily attached direct to the top nozzle adapter plate, thereby eliminating the need for a support plate and hold-down device such as used in previous designs, and, furthermore, making it possible for an inventory of individual absorber rods and thimble plugs to be sent to the reactor site prior to refueling and then, when the final burnable absorber design for each fuel assembly is specified, to be used in inserting the required configuration of absorber rods and thimble plugs into the fuel assembly. This approach obviates the need for on-site manufacturing of absorber assemblies, and provides an additional benefit insofar as, subsequently, the spent absorber rods can be easily released from the adapter plate and readily consolidated in a consolidation canister.

Thus, and more specifically, the present invention, from one aspect thereof, resides in an elongate control member having a latching device for releasably attaching the member, at one end thereof, to a top nozzle adapter plate of a nuclear fuel assembly, said latching structure comprising a mounting body attached to the end of the elongate member and extending axially outward therefrom, and a spring latch disposed about the mounting body and having at least one latch finger movable toward and away from the body between an outer latching position, in which the finger is adapted to engage the adapter plate and to retain the elongate member in a stationary relationship with respect thereto, and an inner unlatching position in which the finger is adapted to be disengaged from the adapter plate and to allow the elongate member to be removed therefrom.

More particularly, the mounting body includes an inner plug portion attached to the end of the elongate member, an outer end portion having a groove defined therein, and a middle body portion having a configuration which generally defines a recessed region surrounding the mounting body at the middle portion thereof.

Furthermore, the spring latch includes an outer ring portion disposed about the outer end portion of the mounting body and having a bulge formed therein which extends into the groove in the outer end portion so as to connect the spring latch to the mounting body. Also, the spring latch includes a plurality of circumferentially spaced apart latch fingers connected at their outer ends to the outer ring portion in cantilever fashion and extending along the middle body portion of the mounting body. The fingers are radially deflectible toward and away from the middle body portion between the outer latching and inner unlatching positions. In their outer latching positions, the fingers are adapted to engage the adapter plate and are generally disposed outside of the recessed region surrounding the mounting body middle portion. In their inner unlatching positions, the fingers are adapted to be disengaged from the adapter plate and are generally disposed within the recessed region surrounding the mounting body middle portion. Each of the latch fingers includes a latching key defined on an inner end thereof which is configured to engage with and disengage from the adapter plate when the finger is deflected between its respective latching and unlatching positions.

The invention, from another aspect thereof, resides in a fuel assembly including a top nozzle having an adapter plate with at least one passageway defined therethrough, at least one guide thimble connected to the adapter plate, and a burnable absorber rod disposed within the guide thimble and connected, at one end thereof, to the adapter plate by a releasable latching device comprising engagable means defined in the adapter plate ; a mounting body attached to said end of the absorber rod and extending axially therefrom through the passageway and above the adapter plate ; and a spring latch disposed about the mounting body above the adapter plate and having at least one latch finger extending downwardly toward the adapter plate. The latch finger is deflectible toward and away from the mounting body between an outer latching position in which the finger engages the engagable means in the adapter plate to retain the absorber rod disposed in the guide thimble, and an inner unlatching position in which the finger is disengaged from the engagable means in the adapter plate to allow removal of the absorber rod from the guide thimble. The mounting body and the spring latch have thereon means for attaching the spring latch to the body.

More particularly, the engagable means in the adapter plate is in the form of a recess formed within the passageway therein. The latch finger extends into the adapter plate passageway for engagement thereof with and disengagement thereof from said recess when the finger is deflected between its respective latching and unlatching positions. Furthermore, the latch finger has a latching key defined on its lower end which is configured to engage the adapter plate within the recess formed in the passageway of the plate. The mounting body has a portion generally coextensive with the latch finger and defining a recessed region along the mounting body. The latch finger is disposed generally outside the recessed region when in its latching position, and generally within the recessed region when in its unlatching position.

A preferred embodiment of the invention will now be described, by way of example, only with reference to the accompanying drawings, in which :

Figure 1 is a side elevational view, with parts partially sectioned and broken away for purposes of clarity, of a fuel assembly in which absorber rods are attached to the top nozzle adapter plate of the assembly by releasable latching devices embodying the invention ;

Figure 2 is an enlarged fragmentary detailed sectional view of the fuel assembly of Figure 1, showing the assembled components of a releasable attaching device associated with the top-nozzle adapter plate and one of the guide thimbles ;

Figure 3 is an enlarged elevational view of a burnable absorber rod including the releasable latching device of the invention ;

Figure 4 is a fragmentary detailed sectional view of the absorber rod in Figure 3, showing the releasable latching device on its upper end on an enlarged scale ;

Figure 5 is an enlarged elevational detail view of a latch spring of the latching device of Figure 4 ;

Figure 6 is a sectional view of the latch spring as taken along line 6-6 of Figure 5 ;

Figure 7 is a bottom plan view of the latch spring as seen along line 7-7 of Figure 5 ;

Figure 8 is an enlarged, elevational detail view, in section, of an elongate mounting body of the latching device of Figure 4 ;

Figure 9 is a sectional view of the mounting body as taken along line 9-9 of Figure 8 ;

Figure 10 is an enlarged view of an upper end portion of the absorber rod together with the latching device disposed thereon and with an actuating sleeve shown, in section, on the left-hand side of the latch as extended downward along the spring so as to force all of its latch fingers to their unlatching positions, and shown on the right-hand side of the latch as retracted from engagement with the latch fingers so as to allow them to return to their normal latching positions ; and

Figure 11 is an enlarged view of the upper end portion of the absorber rod together with the latching device thereon, in conjunction with a guide thimble and the top nozzle adapter plate.

In the following description, like reference characters designate like or corresponding parts throughout the several views, and terms such as "forward", "rearward", "left", "right", "upwardly", "downwardly", and the like, are used as words of convenience not to be construed as limiting terms.

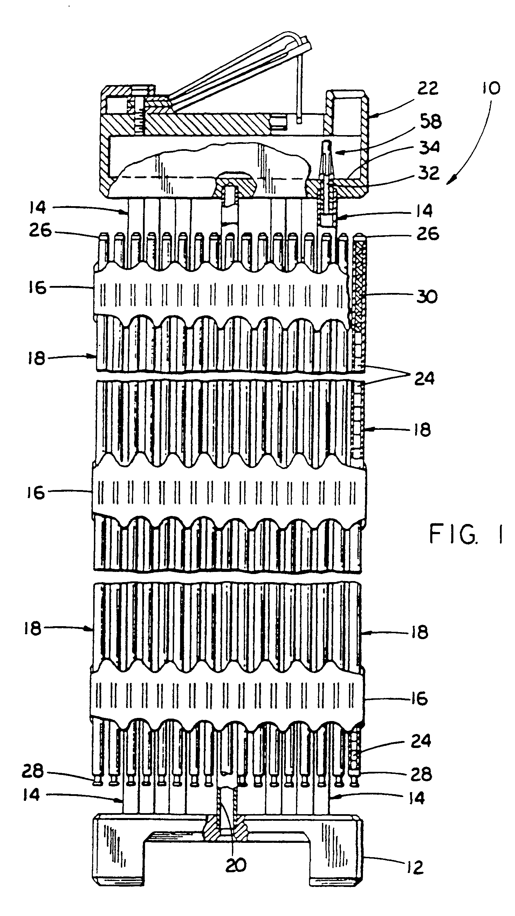

Referring now to the drawings, and particularly to Figure 1, the fuel assembly illustrated therein in vertically foreshortened form and generally designated with the numeral 10 comprises a lower end structure or bottom nozzle 12 for supporting the assembly on the lower core plate (not shown) in the core region of a reactor (not shown), a number of longitudinally extending guide tubes or thimbles 14 which project upwardly from the bottom nozzle 12, transverse grids 16 axially spaced along the guide thimbles 14, an organized array of elongate fuel rods 18 transversely spaced and supported by the grids 16, an instrumentation tube 20 located in the center of the fuel assembly, and an upper end structure or top nozzle 22 removably attached to the upper ends of the guide thimbles 14, in a manner fully described below, to form an integral assembly capable of being conventionally handled without damage to the assembly parts.

Each of the fuel rods 18 contains nuclear fuel pellets 24 and has its opposite ends hermetically sealed with upper and lower end plugs 26, 28. Usually, a plenum spring 30 is disposed between the upper end plug 26 and the pellets 24 to maintain the latter firmly stacked. The fuel pellets 24 composed of fissile material are responsible for creating the reactive power of the nuclear reacter, during operation of which a liquid moderator/coolant such as water, or water containing boron, is pumped upwardly through the fuel assemblies of the core in order to extract therefrom heat for use thereof in producing useful work.

In the operation of a nuclear reactor, it is common practice, as mentioned hereinbefore, initially to design an excess of reactivity into the reactor core and, at the same time, provide means for maintaining the reactivity relatively constant over its lifetime. Such means commonly take the form of control rods (not shown) supported for movement into the guide thimbles of some fuel assemblies in the core, and burnable absorber rods 32 supported stationarily in the guide thimbles 14 of other fuel assemblies in the core. Before describing the means of the invention for stationarily attaching the burnable absorber rods 32 to the top nozzle 22, the means used to attach the guide thimbles 14 to the top nozzle will be briefly described first.

As illustrated in Figures 1, 2 and 11, the top nozzle 22 has a lower adapter plate 34 with a plurality of passageways 36 (only one being shown) formed therethrough. Each guide thimble 14 has its uppermost end portion 38 coaxially positioned within one passageway 36 of the adapter plate 34. In order to provide access to the fuel rods 18 during reconstitution of the fuel assembly 10, the adapter plate 34 of the top nozzle 22 is removably connected to the upper end portions 38 of the guide thimbles 14 by means of an attaching structure, generally designated 40, which provides a plurality of structural joints between the top nozzle 22 and the guide thimbles 14 of the fuel-assembly skeleton.

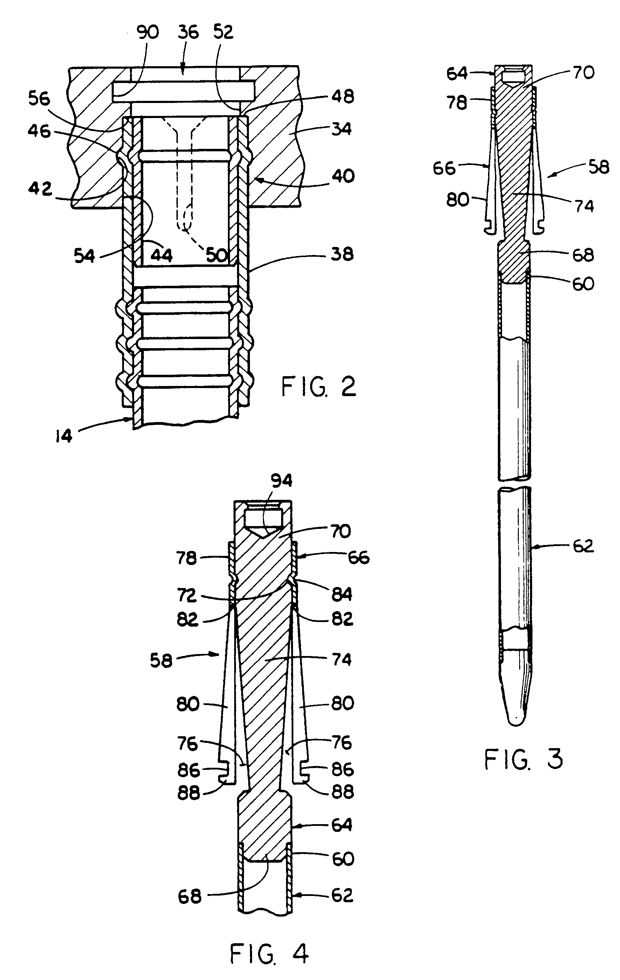

As seen best from Figures 2 to 11, the attaching structure 40 which renders the fuel assembly 10 reconstitutable includes a plurality of outer sockets (only one being shown) defined in the top nozzle adapter plate 34 by the plurality of passageways, such as passageway 36, each of which has an annular groove 42 formed circumferentially in the peripheral wall thereof. The attaching structure 40 includes further a plurality of inner sockets (only one being shown) each defined on the upper end portion 38 of a guide thimble 14, and a plurality of locking tubes 44 (only one being shown) inserted in the respective inner sockets to maintain them in locking engagement within the outer sockets.

Each inner socket is defined by an annular bulge 46 formed circumferentially on the hollow upper end portion 38 of the respective guide thimble 14 and only a short distance below its upper edge 48. A plurality of elongate axial slots 50 (only one being shown in Figure 2) are formed in the upper end portion 38 of each guide thimble 14 to permit elastic collapse of the slotted end portion to a compressed position allowing the circumferential bulge 46 to be inserted into and removed from the annular groove 42. The annular bulge 46 seats in the annular groove 42 when the guide-thimble end portion 38 is inserted in the adapter plate passageway 36 and has assumed an expanded position.

Each passageway 36 in the adapter plate 34 which defines one of the outer sockets consists of an upper bore 52 and a lower bore 54. The lower bore 52 is longer than the upper bore 54 and contains the annular groove 42 which is spaced a short distance below a ledge 56 formed at the intersection of the upper and lower bores 52, 54. The lower bore 54 has a larger diameter than the upper bore 52 so that the ledge 56 faces downward, its primary purpose being to serve as a stop for properly positioning the guide-thimble upper end portion 38 axially within the passsageway 36 when the inner socket is inserted into the outer socket. As seen from Figures 2 to 11, the upper edge 48 of the guide thimble 14 abuts the ledge 56.

Each locking tube 44 is inserted from above the top nozzle 22 into the hollow upper end portion 38 of the guide thimble 14 forming the associated inner socket. When the locking tube 44 is in its locking position, as seen from Figures 2 and 11, it maintains the bulge 46 of the inner socket in locking engagement with the annular groove 42 and prevents the inner socket from collapsing to its releasing position in which it could be withdrawn from the outer socket.

In accordance with previous practice, the burnable absorber rods and thimble plugs are combined to form an assembly in which they are rigidly attached at their upper ends to a support plate resting upon the adapter plate of the top nozzle, with the rods and plugs extending downwardly through the adapter plate passageways and into the guide thimbles. This prior arrangement makes it necessary for the absorber assembly to be completed at a manufacturing facility which normally is located far away from the reactor site, and this, in turn, makes it impossible to postpone specifying the absorber configuration until the time just before actual refueling of the reactor is to take place ; this prevents fine tuning of the nuclear design based on the latest reactor operations input. The releasable latching device of the invention was designed to overcome such obstacles and to provide the desired flexibility allowing the final configuration of the absorber assembly to be decided upon based on last-minute reactor-operating information obtained just before fuel reloading is to be carried out.

Referring now to Figures 3 to 9, there is shown the preferred embodiment of the releasable latching structure or device, generally designated 58, for releasably attaching the upper end 60 of each absorber rod 62 and thimble plug (not shown) directly to the top nozzle adapter plate 34. It is to be noted that the latching device 58, even though shown herein as used together with an absorber rod 62, is suitable for use with any elongate member adapted to be inserted in one of the guide thimbles 14, such as a thimble plug. Therefore, it should be understood that whenever reference is made herein to the latching device as being attached to an absorber rod, the same would apply to a thimble plug.

Basically, the releasable latching device 58 includes an elongate mounting body 64 and a generally tubular latch spring 66. The mounting body 64 has of a generally cylindrical inner plug portion 68, referred to herein also as a first end portion, which is attached to and seals the upper end 60 of the absorber rod 62, a generally cylindrical outer end portion 70, referred to herein also as a second end portion, which has an annular groove 72 circumferentially formed therein, and an intermediate or middle body portion 74 integrally joined at its opposite ends to the inner and outer portions 68, 70. The middle body portion 74 is conical in that it tapers inwards from the outer end portion 70 toward the inner plug portion 68 so as to have a smaller diameter adjacent said first end portion 68 than the latter and thereby define a tapering recessed void region which, as indicated by the numeral 76, extends around the mounting body 64 at the middle portion thereof.

The spring latch 66 of the latching device 58 consists of a generally cylindrical outer ring portion 78 mounted on and disposed about the outer end portion 70 of the mounting body 64, and a plurality of latch fingers 80 spaced apart circumferentially about the middle portion 74, and which latch fingers are connected at their outer ends 82 to the outer ring portion 78 and extend therefrom in cantilever fashion along the middle body portion 74 and toward the plug portion 68 of the mounting body 64. The ring portion 78 has formed therein an annular circumferential bulge 84 which mates with the circumferential groove 72 of the outer end portion 70 to fasten the spring latch 66 and the mounting body 64 to each other.

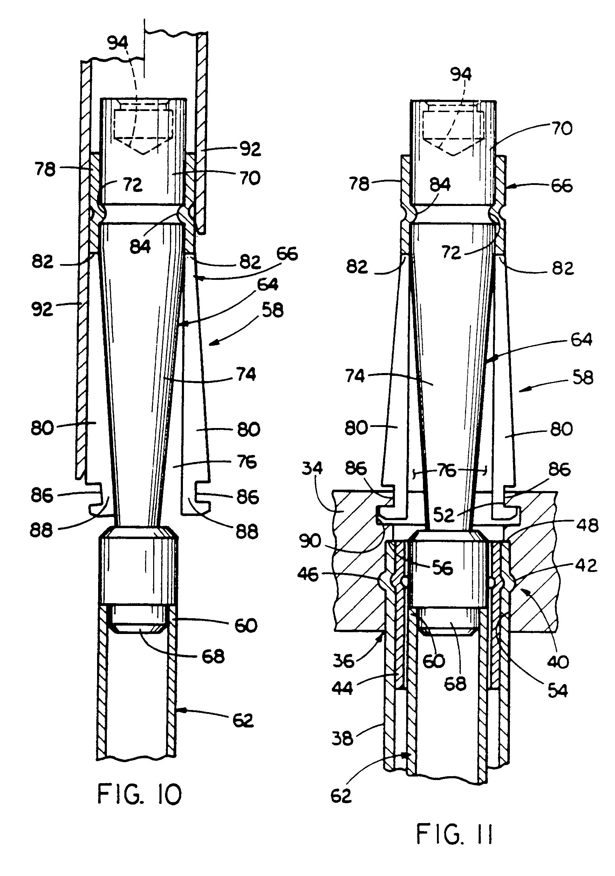

The latch fingers 80 have external latching keys 86 defined on their inner or lower ends 88, and they are radially deflectible, toward and away from the middle body portion 74 of the mounting body 64, between outer latching positions, as shown in respect of the right-hand finger 80 in Figure 10, and inner unlatching positions, as shown in respect of left-hand finger 80 in Figure 10. The normal or relaxed position which each of the fingers 80 naturally assumes is the latching position. The fingers 80 are resiliently flexible so that they will yield and move toward the middle body portion 74 when a sufficient radial inward force is applied to them.

As clearly seen from Figure 10, when the fingers 80 are in their outer latching positions, they are outside the recessed region 76 surrounding the middle portion 74 of the mounting body. On the other hand, when the fingers 80 are in their inner unlatching positions, they are within the recessed region 76.

Referring now to Figure 11, the releasable latching structure or device 58 is shown connecting the upper end 60 of the absorber rod 62 to the adapter plate 34 of the fuel-assembly top nozzle 22, the absorber rod 62 being disposed within a guide thimble 14. The upper end portion 38 of the guide thimble extends into an adapter-plate passageway 36 and is locked in place therein by the attaching structure 40 including the locking tube 44. The mounting body 64 of the latching device 58 has its inner plug portion 68 attached to the upper end 60 of the absorber rod 62, and it extends therefrom axially upward through the adapter plate passageway 36 and to its outer end portion 70 disposed above the adapter plate 34. The middle body portion 74 of the mounting body 64 extends from above the adapter plate 34 downwards into the passageway 36 to approximately the depth of the ledge 56. In this manner, a circumferential recess 90 defined in the adapter plate 34 within the upper bore 52 of its passageway 36 is accessible from above the adapter plate 34 through the recessed void region 76 surrounding the middle body portion 74.

The spring latch 66 of the latching device 58 is disposed about the mounting body 64 above the adapter plate 34 and with its latch fingers 80 extending downward along the middle body portion 74 and into the adapter plate passageway 36. The latching formations in form of latching keys 86 on the inner ends 88 of the latch fingers 80 are disposed within the passageway 36 and aligned with the complementary latching formations within the passageway 36 in the form of the recess 90, the keys 86 being shaped to engage the adapter plate 34 within its recess 90. When the latch fingers 80 are disposed in their latching positions, as seen in Figure 11, they are generally outside the recessed region 76 and have their latching keys 86 engaged in the adapter plate recess 90. The absorber rod 62 is then retained in a stationary relationship with respect to the adapter plate 34.

By inserting a sleeve 92 telescopically over the latch fingers 80, as shown in Figure 10, the latch fingers 80 are yieldably deflected toward the mounting body 64, thereby causing the latching keys 86 to be disengaged from the adapter plate recess 90. The latch fingers 80 are then generally disposed within the recessed region 76 surrounding the mounting body 64, and their latching keys 86 are displaced sufficiently inward to allow the latching structure 58 and, together therewith, the absorber rod 62 to pass upward through the passageway 36 and thereby to allow the absorber rod 62 to be removed from the guide thimble 14. An undercut cavity 94 in the top end of the outer end portion 70 of the mounting body 64 forms a socket for receiving a gripper tool (not shown) to be used in inserting and removing the absorber rod 62.

The spring latch 66 is preferably machined from cold-worked stainless steel tubing. The fingers 80 are formed in a manner such that, in their relaxed position (no external forces applied), the latching keys 86 extend radially outward well beyond the diameter of the recess 90 formed in the adapter plate 34. Thus, when the absorber rod 62 and latching structure 58 are installed in the guide thimble 14 and adapter plate 34, the keys 86 will snap into the recess 90. Since the upper engaging sides of the keys 86 and the recess 90 are flat, any upward force on the absorber rod 62 will not tend to force the keys 86 and the latch fingers 80 inward. Moreover, since there are multiple spring fingers 80, there is redundancy in the locking structure 58. A single absorber rod 62 requires about 5 kg of force to hold it in place against the hydraulic flow forces, which force is well within the capability of the locking structure 58.

## Claims

1. A rod-like control member (62) for use in a nuclear fuel assembly (10) having an end structure (22) with an adapter plate (34), said rod-like control member being insertable into the fuel assembly through a passageway (36) formed in the adapter plate, characterized in that said rod-like control member (62) includes a releasable latching device (58) comprising:

(a) an elongate mounting body (64) rigidly connected to, and extending axially from, the end of the rod-like control member (62) which is its trailing end during insertion thereof through said passageway (36) ; and

(b) a spring latch (66) affixed to said mounting body (64) and having at least one latch finger (80) with a latching formation (86) which is engageable with a complementary latching formation (90) of the adapter plate (34), said or each latch finger (80) being biased toward a latching position causing its latching formation (86), upon full insertion of the rod-like control member (62) into the fuel assembly (10), to engage the complementary latching formation (90) of the adapter plate (34) so as to secure the control member (62) against axial movement thereof relative to the adapter plate, said or each latch finger (80) being movable from said latching position to an unlatching position so as to disengage its latching formation (86) from said complementary latching formation (90) and thereby release the control member (62) for axial removal thereof from the fuel assembly (10).

2. A rod-like control member according to claim 1, characterized in that said elongate mounting body (64) has adjacent one end thereof a first end portion (68) which is attached to the rod-like control member (62), has adjacent its opposite end a second end portion (70) which supports said spring latch (66), and has between said end portions (68,70) an intermediate body portion (74), said or each latch finger (80) extending from said second end portion (70) along the intermediate body portion (74) and towards said first end portion (68) in cantilever fashion, and having adjacent its distal end said latching formation (86).

3. A rod-like control member according to claim 2, characterized in that said or each latch finger (80) is flexible, tending to assume a normal position which corresponds to said latching position and in which said distal end of the latch finger is spaced radially from said intermediate body portion (74) of the mounting body (64), the latch finger (80) being resiliently deflectable from its normal position toward said intermediate body portion (74) and to a position corresponding to said unlatching position.

4. A rod-like control member according to claim 3, characterized in that the spring latch (66) is operable to said unlatching position by means of a sleeve (92) telescopically slideable axially over the spring latch from said opposite end of the mounting body (64), thereby to resiliently deflect said or each latch finger (80) from said latching position to said unlatching position.

5. A rod-like control member according to claim 3, 4, or 5, characterized in that said intermediate body portion (74) has a configuration defining a recessed region (76) for accommodating said or each latch finger (80) when moved to said unlatching position thereof.

6. A rod-like control member according to claim 5, characterized in that said intermediate body portion (74) is tapered from said second end portion (70) of the mounting body (64) toward said first end portion (68) and, adjacent the latter, has a diameter smaller than the diameter of said first end portion, thereby to define said recessed region (76) around said intermediate body portion (74).

7. A rod-like control member according to any one of claims 2 to 6, characterized in that said complementary latching formation (90) is a recess formed in the wall of said passageway (36), and said latching formation (86) adjacent the distal end of said latch finger (80) is a latching key which latchingly engages in said recess (90) upon full insertion of the rod-like control member (62) into the fuel assembly (10).

8. A rod-like control member according to any one of claims 2 to 7, characterized in that said spring latch (66) includes a ring portion (78) mounted on and affixed to said second end portion (70) of the mounting body (64), said or each latch finger (80) being joined to said ring portion and extending therefrom.

9. A rod-like control member according to claim 8, characterized in that said second end portion (70) of the mounting body (64) has an annular groove (72) circumferentially formed therein, and said ring portion (78) of the spring latch (66) has an annular bulge (84) circumferentially formed thereon and lodged in said groove (72) in locking engagement therewith.

## Ansprüche

1. Ein Regelstab (62) für einen Kernbrennsatz (10), bei dem ein eine Adapterplatte (34) aufweisendes Endstück (22) vorgesehen und der Regelstab durch einen in der Adapterplatte vorgesehenen Durchlaß (36) in den Brennsatz einsteckbar ist, **dadurch gekennzeichnet,** daß der Regelstab (62) eine lösbare Sperrvorrichtung 58) aufweist, bestehend aus

(a) einem daran fest angebrachten länglichen Montierkörper (64), der axial von dem Ende des Regelstabes (62) absteht, das während des Einsteckens durch den Durchlaß (36) das hintere Stabende ist ; und

(b) einem am Montierkörper (64) befestigten Federriegel (66), der mindestens einen Riegelfinger (80) mit einer Sperre (86) aufweist, die mit einer ergänzenden Sperre (90) an der Adapterplatte (34) in diese eingreifend, zusammenwirkt, die oder jede Sperre (80) gegen eine Verriegelungsstellung geneigt ist und die Verriegelung bewirkt, wenn der Regelstab (62) vollständig in den Brennsatz (10) eingesetzt ist, um in die ergänzende Sperre (90) der Adapterplatte (34) einzugreifen und dabei den Regelstab (62) gegen eine Axialbewegung in Bezug zur Adapterplatte zu sichern, der oder jeder Riegelfinger (80) aus der Verriegelungs- in eine Entriegelungsstellung bewegbar ist, um die Sperre (86) von der ergänzenden Sperre (90) zu lösen und dabei der Regelstab (62) gelöst wird, so daß er aus dem Brennsatz (10) axial herausbewegbar ist.

2. Regelstab nach Anspruch 1, **dadurch gekennzeichnet,** daß der längliche Montierkörper (64) angrenzend an ein Ende ein am Regelstab (62) befestigtes erstes Endstück (68) aufweist, angrenzend an das gegenüberliegende Ende ein zweites Endstück (70) vorgesehen ist, das den Federriegel (66) trägt, und zwischen den Endstücken (68, 70) ein Zwischenstück (74) angeordnet ist, wobei der oder jeder Riegelfinger (80) von dem zweiten Endstück (70) ausgehend sich entlang des Zwischenstücks (74) auslegerartig gegen das erste Endstück (68) erstreckt und am Distalende die Sperre angebracht ist.

3. Regelstab nach Anspruch 2, **dadurch gekennzeichnet,** daß die federnde ausbildung des oder jedes Riegelfingers (80) dazu neigt, die Normalstellung einzunehmen, die der Verriegelung entspricht und in der das Distalende des Riegelfingers radial vom Zwischenstück (74) des Montierkörpers (68) absteht, wobei der Riegelfinger (80) federnd aus seiner Normalstellung gegen das Mittelstück (74) und in einer der Entriegelungsstellung entsprechende Stellung biegbar ist.

4. Regelstab nach Anspruch 3, **dadurch gekennzeichnet,** daß der Federriegel (66) mittels einer Hülse (92) betätigbar ist, die vom gegenüberliegenden Ende des Montierkörpers (64) teleskopisch axial über den Federriegel schiebbar ist und dabei den oder jeden Riegelfinger (80) federnd aus der Verriegelung in die Entriegelungsstellung biegt.

5. Regelstab nach Anspruch 3, 4 oder 5, **dadurch gekennzeichnet,** daß das Zwischenstück (74) eine Vertiefung (76) aufweist, die den oder jeden Riegelfinger (80) aufnimmt, wenn er in seine Entriegelungsstellung bewegt wird.

6. Regelstab nach Anspruch 5, **dadurch gekennzeichnet,** daß das Zwischenstück (74) ausgehend vom zweiten Endstück (70) des Montierkörpers (64) gegen das erste Endstück (64) zu verjüngt ist, wobei der Durchmesser des an dieses Endstück grenzenden Abschnitts des Montierkörpers kleiner ist als d :r Durchmesser des ersten Endstücks und dabei die Vertiefung (76) um das Zwischenstück (74) bestimmt.

7. Regelstab nach einem der Ansprüche 2 bis 6, **dadurch gekennzeichnet,** daß die ergänzende Sperre (90) eine Aussparung in der Wand des Durchlasses (36) ist und die Sperre (86) angrenzend an das Distalende des Riegelfingers (80) eine Sperrklinke ist, die verriegelnd in die Aussparung (90) eingreift, wenn der Regelstab (62) vollständig im Brennsatz (10) eingesetzt ist.

8. Regelstab nach einem der Ansprüche 2 bis 7, **dadurch gekennzeichnet,** daß der Federriegel (66) ein Ringteil (78) aufweist, das am zweiten Endstück (70) des Montierkörpers (64) angeordnet und daran befestigt ist, wobei der oder jeder Schnappfinger (80) mit dem Ringteil verbunden ist und von diesem ausgeht.

9. Regelstab nach Anspruch 8, **dadurch gekennzeichnet,** daß das zweite Endstück (70) des Montierkörpers (64) eine ringförmig umlaufende Rille (72) aufweist und das Ringteil (78) des Federriegels (66) mit einem ringförmig umlaufenden Wulst (84) versehen ist, der in die Rille (72) verriegelnd eingreift.

## Revendications

1. Elément de commande (62) semblable à une barre pour l'utilisation dans un assemblage combustible nucléaire (10), ayant une structure d'extrémité (22) avec une plaque de gabarit (34), ledit élément de commande semblable à une barre pouvant être inséré dans l'assemblage combustible à travers un passage (36) formé dans la plaque de gabarit, caractérisé par le fait que l'élément de commande (62) semblable à une barre comporte un dispositif d'accouplement (58) détachable comprenant :

(a) un corps de montage (64) allongé qui est raccordé de manière rigide à l'extrémité de l'élément de commande (62) semblable à une barre, fait saillie axialement à partir de l'élément de commande et forme l'extrémité arrière de l'élément de commande pendant l'insertion de celui-ci à travers ledit passage (36) ; et

(b) un dispositif d'accouplement à ressort (66) fixé audit corps de montage (64) et ayant au moins un bras d'accouplement (80) avec une configuration d'accouplement (86) qui peut être mise en prise avec une configuration d'accouplement (90) complémentaire de la plaque de gabarit (34), ledit bras d'accouplement (80) ou chacun des bras d'accouplement étant préchargé en direction d'une position d'accouplement amenant sa configuration d'accouplement (86), après l'insertion complète de l'élément de commande (62) semblable à une barre dans l'assemblage combustible (10), à entrer en prise avec la configuration d'accouplement (90) complémentaire de la plaque de gabarit (34), de manière à immobiliser l'élément de commande (62) à l'encontre d'un mouvement axial par rapport à la plaque de gabarit, ledit bras d'accouplement (80) ou chacun des bras d'accouplement pouvant être déplacé de ladite position d'accouplement jusqu'à une position de libération, de manière à dégager sa configuration d'accouplement (86) de ladite configuration d'accouplement (90) complémentaire et de détacher ainsi l'élément de commande (62) en vue de son retrait axial hors de l'assemblage combustible (10).

2. Elément de commande semblable à une barre selon la revendication 1, caractérisé par le fait que ledit corps de montage (64) allongé possède, à proximité de l'une de ses extrémités, une première partie d'extrémité (68) qui est fixée à l'élément de commande (62) semblable à une barre, et, à proximité de son extrémité opposée, une deuxième partie d'extrémité (70) qui porte ledit dispositif d'accouplement à ressort (66), et, entre lesdites parties d'extrémité (68, 70), une partie de corps intermédiaire (74), ledit bras d'accouplement (80) ou chacun des bras d'accouplement s'étendant en porte à faux à partir de ladite deuxième partie d'extrémité (70), le long de la partie de corps intermédiaire (74) et en direction de ladite première partie d'extrémité (68), et présentant ladite configuration d'accouplement (86) à proximité de son extrémité éloignée.

3. Elément de commande semblable à une barre selon la revendication 2, caractérisé par le fait que ledit bras d'accouplement (80) ou chacun des bras d'accouplement est flexible et tend à occuper une position normale qui correspond à ladite position d'accouplement et dans laquelle ladite extrémité éloignée du bras d'accouplement est radialement espacée de ladite partie intermédiaire (74) du corps de montage (64), le bras d'accouplement (80) pouvant être dévié de manière élastique de sa position normale vers ladite partie de corps intermédiaire (74) et jusqu'à une position correspondant à ladite position de libération.

4. Elément de commande semblable à une barre selon la revendication 3, caractérisé par le fait que le dispositif d'accouplement à ressort (66) peut être amené à ladite position de libération au moyen d'un manchon (92) pouvant être glissé axialement, de façon télescopique, sur le dispositif d'accouplement à ressort, à partir de ladite extrémité opposée du corps de montage (64), afin d'amener ainsi de façon élastique ledit bras d'accouplement (80) ou chacun des bras d'accouplement de ladite position d'accouplement à ladite position de libération.

5. Elément de commande semblable à une barre selon revendication 3, 4 ou 5, caractérisé par le fait que ladite portion de corps intermédiaire (74) a une configuration délimitant une zone en retrait (76) pour recevoir ledit bras d'accouplement (80), ou chacun des bras d'accouplement, lorsque celui-ci est amené à ladite position de libération.

6. Elément de commande semblable à une barre selon la revendication 5, caractérisé par le fait que ladite partie de corps intermédiaire (74) diminue en diamètre à partir de ladite deuxième partie d'extrémité (70) du corps de montage (64) vers ladite première partie d'extrémité (68) et présente, à proximité de cette dernière, un diamètre inférieur au diamètre de ladite première partie d'extrémité, afin de délimiter ainsi ladite zone en retrait (76) autour de ladite partie de corps intermédiaire (74).

7. Elément de commande semblable à une barre selon l'une des revendications 2 à 6, caractérisé par le fait que ladite configuration d'accouplement (90) complémentaire est une encoche formée dans la paroi dudit passage (36), et ladite configuration d'accouplement (86) adjacente à l'extrémité éloignée dudit bras d'accouplement (80) est une dent d'accouplement qui s'engage à la manière d'un loquet dans ladite encoche (90), après l'insertion complète de l'élément de commande (62) semblable à une barre dans l'assemblage combustible (10).

8. Elément de commande semblable à une barre selon l'une des revendications 2 à 7, caractérisé par le fait que ledit dispositif d'accouplement à ressort (66) comprend une partie de bague (78) montée sur ladite deuxième partie d'extrémité (70) et fixée à celle-ci, ledit bras d'accouplement (80) ou chacun des bras d'accouplement étant raccordé à ladite partie de bague et faisant saillie sur celle-ci.

9. Elément de commande semblable à une barre selon la revendication 8, caractérisé par le fait que ladite deuxième partie d'extrémité (70) du corps de montage (64) présente une gorge annulaire (72) circonférentielle ménagée dans le corps de montage, et ladite partie de bague (78) du dispositif d'accouplement à ressort (66) présente un renflement annulaire (84) circonférentiel ménagé dans le dispositif et logé dans ladite gorge (72), dans une relation de verrouillage avec celle-ci.

FIG. 1

FIG. 2

FIG. 3

FIG. 4

FIG. 6

FIG. 5

FIG. 7

FIG. 8

FIG. 9

FIG. 10

FIG. 11

13